# EUROPÄISCHE PATENTSCHRIFT

(11) **EP 2 038 875 B1**
(45) Veröffentlichungstag und Bekanntmachung des Hinweises auf die Patenterteilung: **17.10.2012**
(21) Anmeldenummer: 07724530.6
(22) Anmeldetag: 24.04.2007
(51) Int. Cl.: F02C 7/045, G10K 11/162

(54) **KULISSENELEMENT IN FORM EINES AKUSTIKKISSENS ZUR SCHALLDÄMPFUNG VON KRAFTWERKSTURBINEN**
SLIDING ELEMENT IN THE FORM OF AN ACOUSTIC CUSHION FOR SOUNDPROOFING POWER TURBINES
ÉLÉMENT À COULISSE SOUS FORME DE COUSSIN ACOUSTIQUE POUR AMORTIR LE BRUIT DE TURBINES DE CENTRALES

(30) Priorität: 12.07.2006 DE 102006032259
(43) Veröffentlichungstag der Anmeldung: 25.03.2009
(73) Patentinhaber: Frenzelit Werke GmbH, 95460 Bad Berneck i. F. (DE)
(72) Erfinder: SCHREI, Reiner, 96123 Litzendorf (DE); JESKE-BOOTH, Rita, 95448 Bayreuth (DE)
(74) Vertreter: Becker, Eberhard
(86) Internationale Anmeldenummer: PCT/EP2007/003600
(87) Internationale Veröffentlichungsnummer: WO 2008/006415

(56) Entgegenhaltungen:
- DE-A1- 10 331 268
- DE-A1- 10 331 268
- DE-U1-202006 003 278
- GB-A- 1 341 398
- GB-A- 2 261 846
- JP-A- 6 248 550
- JP-A- 6 248 550
- JP-A- 10 266 386
- US-A- 4 574 099
- US-A- 5 580 646
- US-A- 5 580 646

## Beschreibung

Die vorliegende Erfindung betrifft ein Kulissenelement in Form eines Akustikkissens zur Schalldämpfung der Geräusche von Kraftwerksturbinen, insbesondere Gasturbinen, umfassend eine Außenhaut, gegebenenfalls mindestens eine unter der Außenhaut liegende Vlieslage, einen dahinterliegenden Schalldämpfungsraum, in den eine Füllung aus schalldämpfendem Material eingelegt ist. Derartige Akustikkissen bzw. Kulissenelemente werden in Kulissen eingesetzt, die aus diesen einzelnen Kulissenelementen freispannend zusammengesetzt sind.

Die zuvor genannten Vorrichtungen zur Dämpfung der Geräusche, auch Kulissen genannt, werden in Kraftwerksturbinen, insbesondere in Gasturbinen eingesetzt, um die erzeugten Geräusche möglichst weitgehend zu dämpfen.

Bekannt sind z. B. aus Kühltürmen oder auch aus Großgebläsen Vorrichtungen, die aus Rahmenkonstruktionen bestehen, in die Kissen aus Mineralwolle eingelegt oder eingeschoben sind. Die Dämpfungswerte dieser Vorrichtungen sind zwar grundsätzlich zufriedenstellend, doch hat sich herausgestellt, dass die hauptsächlich eingesetzte Steinwolle auch Fasern enthält, die länger als 5 µm und dünner als 1 µm sind. Falls derartige cancerogene Fasern eingeatmet werden, verursachen diese nach 15 bis 30 Jahren, eventuell auch noch später, Krebs der Atemwege, Lungenkrebs sowie Krebs des Rippen- und Bauchfells, das sogenannte Pleura- und Peritonealmesotheliom. Weiterhin ist bekannt, dass die üblicherweise eingesetzten Steinwollefasern beständig im biologischen Milieu sind und ihre Lungengängigkeit bewiesen ist. Erst durch aufwendige verfahrensmäßige Abwandlungen des konventionellen Steinwolleherstellungsprozesses gelingt es, die verwendeten Steinwollefasern derart auszuwählen, dass keine Fasern mehr vorhanden sind, die länger als 5 µm und dünner als 1 µm sind, d. h. also gesundheitlich unbedenkliche Fasern hergestellt werden können. Daher war es schon ein lang bestehendes Bedürfnis, toxikologisch unbedenkliche Fasern bereitzustellen, die in derartigen Akustikkissen als schalldämpfende Materialien eingesetzt werden können.

US 4,574,099 offenbart ein Akustikelement zur Absorption von Schall, der in sterilen Umgebungen erzeugt wird, wie beispielsweise in Reinräumen, Küchen, Lebensmittelverarbeitungsanlagen oder in der Arzneimittelherstellung. Das Akustikelement besteht aus einer Außenhaut aus Kunststoff, einer Zwischenschicht aus "molded fiber glass" und einem Schalldämpfungsraum, welcher mit geschnittener Glasfaser gefüllt ist.

DE 20 2006 003 278 UI offenbart eine Vorrichtung zur Absorption von Schall in Form eines Kissens. Dieses weist eine Hülle auf, welche aus einem Glasgewebe der Brandklasse A2 besteht. In der Hülle befindet sich ein Schalldämpfungsraum, welcher ein Absorptionsmaterial enthält. Diese besteht in wesentlichen Teilen aus Glas, Glasfaser oder dergleichen und gehört der Brandklasse A2 an.

JP 10-266386 offenbart eine Innenmaterial für Schienenfahrzeuge, welches gute Schallabsorption aufweist. Es besteht auf der Außenseite aus einer dekorativen Schicht, welche beispielsweise aus einem Glasfasergewebe bestehen kann. Diese ist auf einem Metallnetz aufgebracht, welches luftdurchlässig ist und eine stabilisierende Funktion hat. Das Material umfasst weiterhin eine Innenseite, die durch eine Metallfolie gebildet wird. Zwischen Innenseite und Außenseite ist eine Platte angeordnet, die aus Glasfasern oder Steinwolle besteht.

GB 2 261 846 A offenbart ein schalldämpfendes Kompositmaterial. Dieses besteht aus einer Aluminiumfolie als reflektierender Außenschicht gefolgt von einem Glasgamgelege, einer Barriereschicht aus Kunststoff und einer Schalldämpfungsschicht aus Kunststoff oder Glasgewebe. Es schließt sich ein Schalldämpfungsraum an, der mit Glasfasern gefüllt ist und auf der gegenüberliegenden Seite durch eine weitere Schalldämpfungsschicht aus Kunststoff oder Glasgewebe begrenzt wird.

DE 103 31 268 A1 beschreibt ein Kulissenelement in Form eines Kissens zum Einsatz in Vorrichtungen zur Dämpfung der Geräusche von Kraftwerksturbinen, insbesondere von Gasturbinen, umfassend eine abgeschlossene, schalldurchlässige Außenhaut aus einem textilen Flächengebilde, herstellbar aus Thermoglasfasern, mit einem dahinterliegenden Schalldämpfungsraum, der eine Füllung aus schalldämpfendem Material als Akkustikmaterial aufweist.

Aufgabe der vorliegenden Erfindung ist es daher, neuartige, gesundheitlich unbedenkliche Füllungsmaterialien für ein Kulissenelement zu finden, die die heutigen Zulassungskriterien erfüllen.

Diese Aufgabe wird erfindungsgemäß durch das Kulissenelement gemäß Anspruch 1 gelöst, wobei die Kulissen aus einzelnen Kulissenelementen, nämlich aus Akustikkissen freispannend zusammengesetzt sind, die eine abgeschlossene, schalldurchlässige Oberfläche mit dazwischenliegendem Schalldämpfungsraum aufweisen.

Durch Verwendung von Glasfasern, insbesondere E-Glasfasern (Elektro-Glasfasern) und/oder R-Glasfasern und/oder S2-Glasfasern, d.h. Spezialglasfasern mit einer bestimmten Länge und mit einem bestimmten Durchmesser konnten erstmals völlig ungefährliche Fasern zur Herstellung der hochdichten Füllung bzw. der Außenhaut bzw. des textilen Flächengebildes verwendet werden, sodass das Krebsrisiko sehr stark vermindert bzw. bei der Herstellung und bei dem Einsatz der Kulissenelemente vermieden wird. Weiterhin wird eine sehr preisgünstige, alternative Methode zur Bereitstellung von Akustikkissen aufgezeigt, die in Kulissen zur Geräuschdämmung von Gasturbinen in Kraftwerken eingesetzt werden können.

In einer erfindungsgemäßen Ausführungsform umfasst ein Kulissenelement in Form eines Kissens zum Einsatz in Vorrichtungen zur Dämpfung der Geräusche von Kraftwerksturbinen, insbesondere von Gasturbinen eine abgeschlossene, ganz oder teilweise schalldurchlässige Außenhaut aus einem textilen Flächengebilde, herstellbar aus Glasfasern, E-Glasfasern, R-Glasfasem, S2-Glasfasern, Silikatglasfasern, HT-Glasfasern oder Gemischen daraus, welches Kulissenelement mit Edelstahlfasern vernadelt ist und gegebenenfalls mindestens eine unter der Außenhaut liegenden Vlieslage aus E-Glas, Silikatglas oder Gemischen daraus, mit einem dahinterliegenden Schalldämpfungsraum, der eine hochdichte Füllung aus der Gruppe aus geschnittener Glasfaser, Basaltfaser, Steinwollefaser oder Mineralwolle als Akustikmaterial aufweist (siehe Anspruch 1).

Das vernadeltes textiles Flächengebilde ist vorzugsweise 40 bis 9,5 mm dick ist und hat vorzugsweise ein Gewicht von 900 bis 2300 g/m².

In einer bevorzugten Ausführungsform besteht das textile Flächengebilde der Außenhaut aus Glasfasern, E-Glasfasern, R-Glasfasern, S2-Glasfasern, Silikatglasfasern, HT-Glasfasern oder Gemischen daraus, wobei E-Glasfasern und Gemische aus Silikatglasfasern, HT-, Rund S2-Glasfasern bevorzugt sind. Diese Fasern haben vorzugsweise eine Dicke von 3 bis 9 mm und das daraus hergestellte Flächengebilde hat vor der Vernadelung vorzugsweise ein Gewicht von 330 bis 1400 g/m².

Die Edelstahlfasern, welche für die Vernadelung verwendet werden haben vorzugsweise einen Durchmesser von maximal 90um und ein Gewicht von 20 bis 100 g/10 cm Faserband. In einer besonders bevorzugten Ausführungsform beträgt das Gewicht 60 g/10 cm Faserband.

In einer weiteren erfindungsgemäßen Ausführungsform umfasst ein Kulissenelement in Form eines Kissens zum Einsatz in Vorrichtungen zur Dämpfung der Geräusche von Kraftwerksturbinen, insbesondere von Gasturbinen, eine abgeschlossene, ganz oder teilweise schalldurchlässige Außenhaut aus einem textilen Flächengebilde, herstellbar aus Glasfasern oder HT-Glasfasern oder Gemischen daraus und mindestens eine unter der Außenhaut liegende Vlieslage aus E-Glasfasern, Silikatglasfasern oder Gemischen daraus, mit einem dahinterliegenden Schalldämpfungsraum, der eine hochdichte Füllung aus geschnittener Glasfaser als Akustikmaterial aufweist (siehe Anspruch 7).

Erfindungsgemäß werden für die hochdichte Füllung geschnittene und aufgelöste Glasfasern als Akustikmaterial eingesetzt, wobei E-Glasfasern und/oder R-Glasfasern und/oder S2-Glasfasern oder Gemische daraus bevorzugt sind. Unter hochaufgelösten Glasfasern wird erfindungsgemäß eine hochvoluminöse Glasfaser verstanden. Dabei weisen die Filamente Durchmesser von 6 bis 22 µm und Längen von 10 bis 200 mm auf. Aufgrund des Herstellungsprozesses der Glasfasern bergen diese daher keine gesundheitlichen Risiken mehr.

Vorzugsweise weisen die erfindungsgemäßen Kulissenelemente eine Beschichtung auf ihrer Außenfläche auf. Die Beschichtung kann aus hochtemperaturbeständigen Materialien wie Aluminium und/oder Kieselsol und/oder Vermiculit bestehen.

Bei dem erfindungsgemäß verwendeten Kieselsol kann es sich um kolloidale Polykieselsäurelösung handeln, die auf die Oberfläche aufgebracht wird. Weiterhin kann Vermiculit erfindungsgemäß eingesetzt werden. Unter Vermiculit wird eine Gruppe von Silikatmineralien verstanden mit der chemischen Zusammensetzung (Mg,Ca)_{0,7}(Mg,Fe,Al)₆(Al,Si)₈O₂₂(OH)₄·8H₂O. Die in Klammern angegebenen Elemente können sich jeweils gegenseitig vertreten, stehen jedoch immer im selben Mengenverhältnis zu den anderen Bestandteilen des Minerals. Durch Verwendung von metallischem Aluminium und/oder Kieselsol, d. h. SiO₂ und/oder Vermiculit wird die Temperaturbeständigkeit und -festigkeit der Außenhaut nachhaltig positiv beeinflusst.

Die Glasfaserausfüllung des Schalldämpfungsraumes hat eine Dichte von 115 kg bis 130 kg/m³, insbesondere von 120 bis 125 kg/m³, je nach Anforderung im Anwendungsfall. Die für die Füllung verwendeten Filamente weisen Durchmesser von 6 bis 22 µm und eine Länge von 10 bis 200 mm, insbesondere von 40 bis 60 mm auf. Daher ist erfindungsgemäß gewährleistet, dass keine Gesundheitsgefahren mehr von der Verwendung dieser Fasern ausgehen.

Die erfindungsgemäßen Akustikkissen bzw. Kulissenelemente werden in Kulissen, bestehend aus einer Rahmenkonstruktion eingesetzt. Die Dämpfungswerte dieser Vorrichtungen entsprechen denen, in die Kissen aus Mineralwolle als dämpfende Materialien eingelegt oder eingeschoben sind.

Die Erfindung zeichnet sich auch dadurch aus, dass sie insbesondere für den Einsatz in Gasturbinen geeignet ist, weil sie sowohl stehend als auch hängend angeordnet werden kann. Die einzelne Kulisse besteht aus einzelnen leicht handhabbaren Kulissenelementen, die nach den jeweiligen Bedürfnissen und Einsatzfällen entsprechend zu Kulissen zusammengestellt werden können. Dabei gilt dies sowohl bezüglich der Zuordnung zur Kulisse als auch bezüglich des Aufbaus des jeweiligen Kulissenelements. Durch die Verbindung bzw. gegenseitige zweckmäßige Zuordnung unterschiedlicher Schalldämpfungsmaterialien ist eine Dämpfung im tieffrequenten sowie im mittel- und hochfrequenten Bereich gegeben.

Weitere Einzelheiten und Vorteile des Erfindungsgegenstandes ergeben sich aus der nachstehenden Beschreibung der Zeichnungen, in denen bevorzugte Ausführungsformen mit den dazu notwendigen Einzelheiten und Einzelteilen dargestellt sind. Es zeigt:
- Fig. 1: eine schematische Darstellung eines erfindungsgemäßen Kulissenelements schräg von der Seite,
- Fig. 2: eine Seitenansicht eines Kulissenelements, und
- Fig. 3: eine perspektivische Ansicht einer Kulisse mit eingesetzten Kulissenelementen.

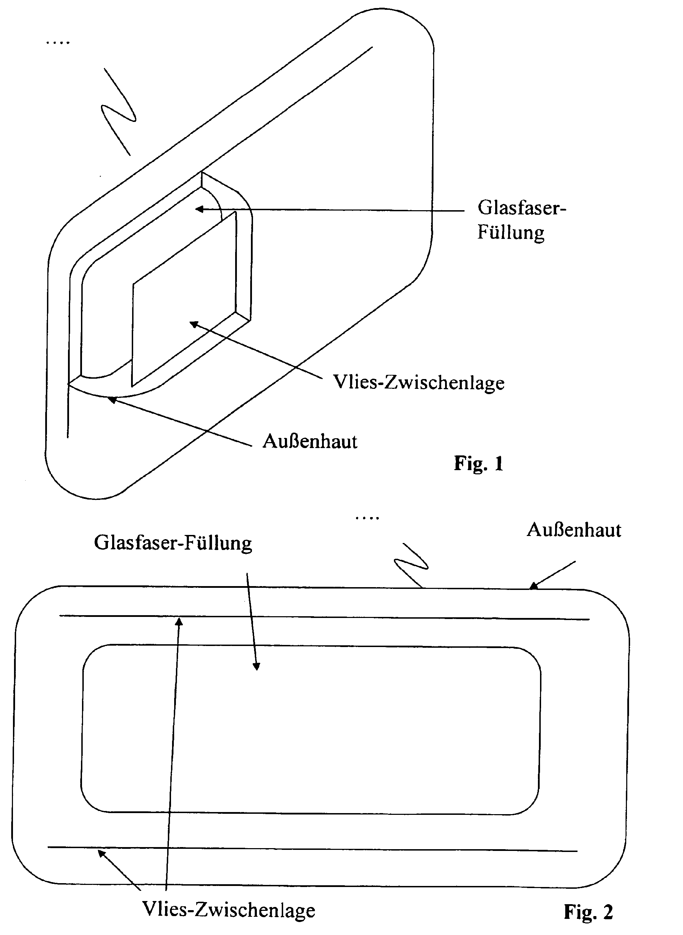

In Figur 1 ist schematisch ein Akustikkissen bzw. ein Kulissenelementen in Form eines Kissens dargestellt. Die Kulissenelemente haben beispielsweise Größen von 80 x 40 x 40 cm und vorzugsweise eine maximale Dicke von 45 cm. Das Akustikkissen weist eine Außenhaut mit für den Einsatz optimalen Luftdurchlässigkeits- bzw. Strömungsresistenzwerten auf aus einem textilen Flächengebilde auf, welches vorzugsweise aus Glas- oder HT-Glasfasern herstellbar ist. An die Außenhaut schließt sich mindestens eine Nadelvlieslage an. Die Vlieslage ist aus E-Glasfasern oder Silikatglasfasern oder aus Gemischen daraus hergestellt.

Für besondere Anforderungen besteht die Möglichkeit die o.g. Gewebelage mit der Vlieslage ohne den Einsatz chemischer Hilfsmittel zu verbinden.

Fig. 2 zeigt eine Seitenansicht eines Kulissenelements.

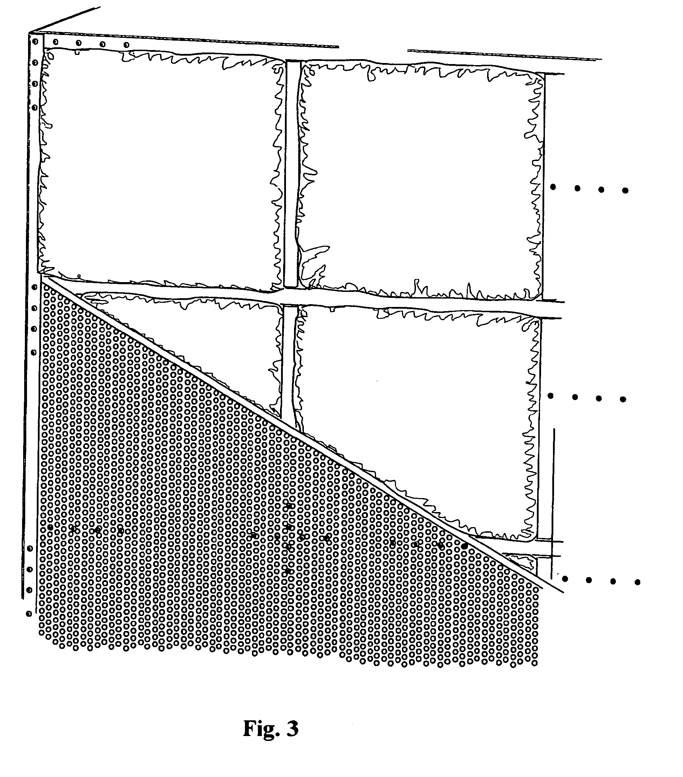

Fig. 3 zeigt eine perspektivische Darstellung einer Rahmenkonstruktion mit offenen Längsseiten. In dieser Rahmenkonstruktion werden die einzelnen Kulissenelemente eingeschoben. Die komplette Kulisse kann dann zur Schalldämpfung in Gasturbinen in Kraftwerken eingesetzt werden.

Die Akustikkissen müssen vorzugsweise eine Quader/Würfelform aufweisen, um die Rahmenkonstruktionen optimal auszufüllen. Über eine bestimmte Konstruktions-/Nähtechnik wird sichergestellt, dass keine Nähte dem direkten Gasstrom in der Kulisse ausgesetzt werden.

## Patentansprüche

1. Kulissenelement in Form eines Kissens zum Einsatz in Vorrichtungen zur Dämpfung der Geräusche von Kraftwerksturbinen, insbesondere von Gasturbinen, umfassend eine abgeschlossene, schalldurchlässige Außenhaut aus einem textilen Flächengebilde, mit einem dahinterliegenden Schalldämpfungsraum, der eine Füllung aus schalldämpfendem Material aufweist,
**dadurch gekennzeichnet, dass** die Außenhaut, ganz oder teilweise schalldurchlässig ist und aus Glasfasern, E-Glasfasern, R-Glasfasern S2-Glasfasern, Silikatglasfasern, HT-Glasfasern oder Gemischen daraus hergestellt ist, wobei das Flächengebilde mit Edelstahlfasern vernadelt ist und,
wobei das Kulissenelement gegebenenfalls mindestens eine unter der Außenhaut liegende Vlieslage aus E-Glasfasern, Silikatglasfasern oder Mischungen daraus aufweist,
und dass der dahinterliegende Schalldämpfungsraum eine hochdichte Füllung aus der Gruppe aus geschnittener Glasfaser, Basaltfaser, Steinwollefaser oder Mineralwolle als Akustikmaterial aufweist,
wobei die für die Glasfaserfüllung verwendeten Filamente einen Durchmesser von 6 bis 22 µm und eine Länge von 10 bis 200 mm aufweisen.

2. Kulissenelement gemäß Anspruch 1, **dadurch gekennzeichnet, dass** das vernadelte textile Flächengebilde 4,0 bis 9,5 mm dick ist und ein Gewicht von 900 bis 2300 g/m² hat.

3. Kulissenelement gemäß Anspruch 1 oder 2, **dadurch gekennzeichnet, dass** das textile Flächengebilde der Außenhaut aus E-Glasfasern und aus Gemischen aus Silikatfasern, HT-, R- und S2-Glasfasern besteht.

4. Kulissenelement gemäß Anspruch 3, **dadurch gekennzeichnet, dass** die Fasern eine Dicke von 3 bis 9 mm haben und das daraus hergestellte Flächengebilde vor der Vernadelung ein Gewicht von 330 - 1400g/m² hat.

5. Kulissenelement gemäß Anspruch 1, **dadurch gekennzeichnet, dass** die Edelstahlfasern einen Durchmesser von maximal 90 µm und ein Gewicht von 20 bis 100 g/10 cm Faserband hat.

6. Kulissenelement gemäß Anspruch 5, **dadurch gekennzeichnet, dass** die Edelstahlfasern ein Gewicht von 60 g/10 cm Faserband haben.

7. Kulissenelement in Form eines Kissens zum Einsatz in Vorrichtungen zur Dämpfung der Geräusche von Kraftwerksturbinen, insbesondere von Gasturbinen, abgeschlossene, gemäß einem der Ansprüche 1 - 6, umfassend
eine abgeschlossene, ganz oder teilweise schalldurchlässige Außenhaut aus einem textilen Flächengebilde, herstellbar aus Glasfasern oder HT-Glasfasern oder Gemischen daraus,
mindestens eine unter der Außenhaut liegende Vlieslage aus E-Glasfasern, Silikatglasfasern oder Gemischen daraus, einen dahinterliegenden Schalldämpfungsraum, der eine hochdichte Füllung aus geschnittener Glasfaser als Akustikmaterial aufweist.

8. Kulissenelement gemäß einem der Ansprüche 1 bis 7, **dadurch gekennzeichnet, dass** die hochdichte Füllung des Schalldämpfungsraums aus geschnittenen E-Glasfasern und/oder R-Glasfasern und/oder S2-Glasfasern und/oder Mischungen daraus besteht.

9. Kulissenelement gemäß Anspruch 1 bis 8, **dadurch gekennzeichnet, dass** die Außenhaut zusätzlich eine Beschichtung aus Aluminium und/oder Kieselsol und/oder Vermiculit aufweist.

10. Kulissenelement gemäß einem der vorhergehenden Ansprüche 1 bis 9, **dadurch gekennzeichnet, dass** die Füllung des Schalldämpfungsraums eine Dichte von 30 bis 150 kg/m³ aufweist.

11. Kulissenelement gemäß einem der vorhergehenden Ansprüche 1 bis 10, **dadurch gekennzeichnet, dass** die Gewebeaußenhaut mit der darunter liegenden Vlieseinlage ohne Einsatz chemischer Hilfsmittel verbunden ist.

12. Kulisse, bestehend aus einer Rahmenkonstruktion, in die Kulissenelemente gemäß einem oder mehreren der vorhergehenden Ansprüche 1 bis 11 eingelegt oder eingesetzt sind.

## Claims

1. Splitter element in the form of a cushion useable in devices for damping the noises of power plant turbines, in particular gas turbines, comprising a closed sound permeable outer skin of a textile fabric and having a subjacent sound absorption space, which comprises a filling of a sound absorbing material,
**characterized in that** the outer skin is completely or partially sound permeable and is produced from glass fibres, E glass fibres, R glass fibres, S2 glass fibres, silicate glass fibres, HT glass fibres or mixtures thereof, wherein the fabric is needled with stainless steel fibres, and
wherein the splitter element optionally comprises at least one nonwoven layer of E glass fibres, silicate glass fibres or mixtures thereof being located below the outer skin,
and that the subjacent sound absorption space comprises a high-density filling from the group of cut glass fibre, basalt fibre, rock wool fibre or mineral wool as acoustic material,
wherein the filaments used for the glass fibre filling have a diameter of 6 to 22 µm and a length of 10 to 200 mm.

2. Splitter element according to claim 1, **characterized in that** the needled textile fabric is 4.0 to 9.5 mm thick and has a weight of 900 to 2,300 g/m².

3. Splitter element according to claim 1 or 2, **characterized in that** the textile fabric of the outer skin consists of E glass fibres and of mixtures of silicate fibres, HT glass fibres, R glass fibres and S2 glass fibres.

4. Splitter element according to claim 3, **characterized in that** the fibres are 3 to 9 mm thick and the fabric produced thereof has a weight of 330 to 1,400 g/m² prior to the needling.

5. Splitter element according to claim 1, **characterized in that** the stainless steel fibres have a diameter of at most 90 µm and a weight of 20 to 100g/10 cm sliver.

6. Splitter element according to claim 5, **characterized in that** the stainless steel fibres have a weight of 60 g/10 cm sliver.

7. Splitter element in form of a cushion useable in devices for damping the noises of power plant turbines, in particular gas turbines, according to any one of claims 1 to 6, comprising
a closed completely or partially sound permeable outer skin of a textile fabric, obtainable from glass fibres or HT glass fibres or mixtures thereof,
at least one nonwoven layer of E glass fibres, silicate glass fibres or mixtures thereof being located below the outer skin, a subjacent sound absorption space, which comprises a high-density filling of cut glass fibre as acoustic material.

8. Splitter element according to any one of claims 1 to 7, **characterized in that** the high-density filling of the sound absorption space consists of cut E glass fibres und/or R glass fibres and/or S2 glass fibres and/or mixtures thereof.

9. Splitter element according to claim 1 to 8, **characterized in that** the outer skin additionally comprises a coating of aluminium and/or silica sol and/or vermiculite.

10. Splitter element according to any one of the preceding claims 1 to 9, **characterized in that** the filling of the sound absorption space has a density of 30 to 150 kg/m³.

11. Splitter element according to any one of the preceding claims 1 to 10, **characterized in that** the fabric outer skin is connected with the subjacent nonwoven layer without the use of chemical adjuvants.

12. Splitter, consisting of a frame construction, in which splitter elements according to one or more of the preceding claims 1 to 11 are inserted or applied.

## Revendications

1. Elément de coulisse se présentant sous la forme d'un coussin destiné à un usage dans des dispositifs d'amortissement des bruits de turbines de centrales électriques, en particulier de turbines à gaz, comprenant une membrane extérieure fermée en tissu textile laissant passer entièrement ou partiellement le son, comportant un espace d'isolation phonique placé derrière et présentant un remplissage en matériau d'isolation phonique,
**caractérisé en ce que** la membrane extérieure laisse entièrement ou partiellement passer le son et est fabriquée à partir de fibres de verre, fibres de verre E, fibres de verre R, fibres de verre S2, fibres de verre de silicate, fibres de verre HT ou leurs mélanges, le tissu étant aiguilleté avec des fibres d'acier inox et
l'élément à coulisse présentant éventuellement au moins une épaisseur de non-tissé en fibres de verre E, fibres de verre de silicate ou leurs mélanges placée sous la membrane extérieure,
et que l'espace d'isolation phonique placé derrière présente un remplissage très dense du groupe composé des fibres de verre, fibres de basalte, fibres de laine de verre coupées ou laine minérale faisant office de matériau acoustique,
les filaments utilisés pour le remplissage en fibres de verre ayant un diamètre de 6 à 22 µm et une longueur de 10 à 200 mm.

2. Elément de coulisse selon la revendication 1, **caractérisé en ce que** le tissu textile aiguilleté a une épaisseur de 4,0 à 9,5 mm et un poids de 900 à 2300 g/m².

3. Elément de coulisse selon la revendication 1 ou 2, **caractérisé en ce que** le tissu textile de la membrane extérieure est composé de fibres de verre E et de mélanges de fibres de silicate et de fibres de verre HT, R et S2.

4. Elément de coulisse selon la revendication 3, **caractérisé en ce que** les fibres ont une épaisseur de 3 à 9 mm et que le tissu fabriqué à partir de celles-ci a un poids de 330 à 1400 g/m² avant l'aiguilletage.

5. Elément de coulisse selon la revendication 1, **caractérisé en ce que** les fibres d'acier inox ont un diamètre de 90 µm au maximum et un poids de 20 à 100 g/10 cm de bande fibreuse.

6. Elément de coulisse selon la revendication 5, **caractérisé en ce que** les fibres d'acier inox ont un poids de 60 g/10 cm de bande fibreuse.

7. Elément de coulisse se présentant sous la forme d'un coussin destiné à un usage dans des dispositifs d'amortissement des bruits de turbines de centrales électriques, en particulier de turbines à gaz, selon une des revendications 1 à 6, comprenant
une membrane extérieure fermée laissant passer entièrement ou partiellement le son en tissu textile, pouvant être fabriquée à partir de fibres de verre ou fibres de verre HT ou leurs mélanges,
au moins une épaisseur de non-tissé en fibres de verre E, fibres de verre de silicate ou leurs mélanges placée sous la pellicule extérieure, un espace d'isolation phonique placé derrière présentant un remplissage très dense de fibres de verre coupées en matériau acoustique.

8. Elément de coulisse selon une des revendications 1 à 7, **caractérisé en ce que** le remplissage très dense de l'espace d'isolation phonique est composé de fibres de verre E et/ou fibres de verre R et/ou fibres de verre S2 coupées et/ou leurs mélanges.

9. Elément de coulisse selon une des revendications 1 à 8, **caractérisé en ce que** la membrane extérieure présente en outre un revêtement en aluminium et/ou dioxyde de silicium et/ou vermiculite.

10. Elément de coulisse selon une des revendications 1 à 7, **caractérisé en ce que** le remplissage de l'espace d'isolation phonique présente une densité de 30 à 150 kg/m³.

11. Elément de coulisse selon une des revendications précédentes 1 à 10, **caractérisé en ce que** la membrane extérieure du tissu est assemblée à la garniture en non-tissé sous-jacente sans utiliser d'auxiliaires chimiques.

12. Coulisse composée d'une structure de cadre, dans laquelle sont posés ou insérés des éléments de coulisse selon une ou plusieurs revendications précédentes 1 à 11.
